(19) Europäisches Patentamt
European Patent Office
Office européen des brevets

(11) Veröffentlichungsnummer: **0 171 696**
**B1**

(12) # EUROPÄISCHE PATENTSCHRIFT

(45) Veröffentlichungstag der Patentschrift: **04.01.89**

(51) Int. Cl.⁴: **C 25 B 13/08,** C 25 B 1/46 // C08J5/22, B01J39/18

(21) Anmeldenummer: **85109494.6**

(22) Anmeldetag: **27.07.85**

(54) **Verfahren zur Elektrolyse von Natriumchlorid.**

(30) Priorität: **08.08.84 DE 3429182**

(43) Veröffentlichungstag der Anmeldung: **19.02.86 Patentblatt 86/8**

(45) Bekanntmachung des Hinweises auf die Patenterteilung: **04.01.89 Patentblatt 89/1**

(84) Benannte Vertragsstaaten: **DE FR GB IT NL**

(56) Entgegenhaltungen:
**EP-A-0 044 157**
**EP-A-0 068 285**
**DE-A-2 938 995**
**GB-A-1 516 048**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hengel, Rolf, Dr., Watzmannring 37, D-8269 Burgkirchen (DE)**

**EP 0 171 696 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Elektrolyse einer wäßrigen Lösung von Natriumchlorid in Elektrolysezellen, die durch eine Kationenaustauscher-Membran aus einem perfluorierten Polymeren mit Carboxylgruppen in eine Anoden- und eine Kathodenkammer geteilt ist.

Die Elektrolyse von Alkalichloriden zur großtechnischen Gewinnung von Chlor und von Alkalilauge kann im wesentlichen nach drei Verfahren durchgeführt werden, nämlich dem Amalgam-Verfahren, dem Diaphragma-Verfahren und dem Membran-Verfahren. Das letztgenannte Verfahren hat im vergangenen Jahrzehnt einen stürmischen Aufschwung genommen, seitdem es gelang, Ionenaustauscher-Membranen auf der Basis fluorhaltiger Polymerer zu entwickeln, die unter den Elektrolysebedingungen genügend beständig sind und eine Stromausbeute gewährleisten, die mit den beiden erstgenannten Verfahren konkurrieren kann. Carboxylgruppenhaltige Membranen auf der Basis von Mischpolymeren fluorhaltiger Vinylether mit Fluorolefinen sind bekanntgeworden, beispielsweise aus der DE-AS-2 510 071, wobei es sich dort um carboxylgruppenhaltige Terpolymere handelt, sowie aus der GB-PS-1 516 048 und der DE-PS-2 938 995, in denen Bipolymere aus Tetrafluorethylen (TFE) und carboxylgruppenhaltigen perfluorierten Alkylvinylethern beschrieben werden. Solche Membranen erreichen zufriedenstellende Stromausbeuten von etwa 94 Prozent bei relativ hoher Zellspannung, womit sich Energieausbeuten von etwa 2200 kWh/t Natriumhydroxid erzielen lassen. Eine Verbesserung wurde durch Membranen erreicht, deren anodenseitige Schicht Sulfonsäuregruppen und deren kathodenseitige Schicht Carbonsäuregruppen trägt. Solche Membranen sind beispielsweise beschrieben in der US-PS-4 151 053 und der US-PS-4 340 680. Mit solchen Membranen lassen sich Energieausbeuten erzielen, die im allgemeinen unterhalb eines Wertes von 2150 kWh/t Natriumhydroxid liegen, jedoch besteht deren erheblicher Nachteil darin, daß sich in der Grenzschicht der beiden verschiedenen Copolymeren Metallhydroxide abscheiden können, was bei längerer Betriebsdauer zum Ansteigen der Zellspannung und gegebenenfalls auch zu einer Beeinträchtigung des Verbundes führt. Es wäre daher ein Vorteil, über Einschichtmembranen verfügen zu können, die die ausgezeichneten Energieausbeuten der Verbundmembranen, aber nicht deren nachteilige Eigenschaften aufweisen.

Um diesem Bedürfnis Rechnung zu tragen, wird gemäß der vorliegenden Erfindung im Verfahren der Elektrolyse von Natriumchlorid, wie es einleitend bezeichnet worden ist, eine Kationenaustauscher-Membran verwendet, die dadurch gekennzeichnet ist, daß sie aus einem Copolymeren besteht, das aus wiederkehrenden Einheiten

$-CF_2-CF_2-$

und

$$-CF_2-\underset{\displaystyle O-CF_2-CF_2-COONa}{\underset{|}{CF}}-$$

zusammengesetzt ist, daß sie eine Ionenaustauschkapazität von 1,55 bis 1,74 mVal/g trockenes Polymeres in der $H^+$-Form besitzt, und daß ihre Längenausdehnung bei Raumtemperatur, welche eintritt durch Verseifen der Esterform in 25 gew.-%-iger wäßriger Kalilauge bei 90° C über einen Zeitraum von 12 h, zwischen 3,2 und 6,0 % liegt. Vorzugsweise beträgt die Ionenaustauschkapazität 1,58 bis 1,70 mVal/g, die Längenausdehnung 3,5 bis 5 %.

Werden bei der Elektrolyse von Natriumchlorid solche Einschichtmembranen verwendet, die sich durch die genannte kurze Seitenkette in Kombination mit einem eng begrenzten Bereich der Ionenaustauschkapazität und durch eine niedrige Längenausdehnung, bedingt durch eine Quellung bei der Verseifung der intermediären Esterform in Kalilauge, auszeichnen, so ist es überraschenderweise möglich, Energieausbeuten zu erreichen, wie sie bisher nur mit den bekannten Verbundmembranen zu erzielen waren, wobei aber deren oben geschilderte Nachteile nicht in Kauf genommen werden müssen.

Ein Verfahren zur Herstellung der erfindungsgemäß verwendeten Membranen beginnt mit der Herstellung des entsprechenden Copolymeren aus Tetrafluorethylen und ω-Hydroperfluor-(propylvinylether) (ω-HPPVE). Das letztgenannte Comonomere ω-HPPVE kann nach der Methode erhalten werden, die von Young et al. in J. Org. Chem., 42 (1977), Seiten 4055 bis 4058, beschrieben worden ist. Die Copolymerisation von TFE und ω-HPPVE kann prinzipiell nach allen gängigen Methoden erfolgen, wie sie für die Copolymerisation von Fluorolefinen bekannt sind, also durch Copolymerisation in einer geeigneten organischen Flüssigkeit als Polymerisationsmedium, insbesondere in einem Chlorfluoralkan, oder auch in wäßrigem Medium nach dem Verfahren der Suspensions- oder der Emulsionspolymerisation. Vorzugsweise erfolgt die Herstellung des Copolymeren nach dem Verfahren der Emulsionspolymerisation in wäßriger Phase zu wäßrigen kolloidalen Dispersionen, aus denen das Copolymere dann mit üblichen Mitteln, wie zum Beispiel durch hochtouriges Rühren und/oder die Zugabe eines wasserlöslichen Elektrolyten, durch Koagulation ausgefällt, gewaschen und getrocknet wird.

Die Copolymerisation von TFE und ω-HPPVE erfolgt in Gegenwart von Initiatoren, wie sie für

die Copolymerisation von Fluorolefinen üblich sind. Wird sie im organischen Medium, insbesondere in einem Chlorfluoralkan, durchgeführt, so sind vor allem Bis-(perfluoracyl)-peroxide geeignet. Für die Copolymerisation in wäßriger Phase können wasserlösliche peroxidische Verbindungen wie beispielsweise Persulfate oder Perborate (jeweils in Form ihrer Alkali- oder Ammoniumsalze) oder auch $H_2O_2$ eingesetzt werden. Weiterhin sind verwendbar, insbesondere für die Copolymerisation zu kolloidalen, wäßrigen Dispersionen, Redox-Initiatorsysteme, zusammengesetzt aus einer der genannten peroxidischen Verbindungen oder auch aus anderen Peroxiden, wie beispielsweise Diacylperoxiden, und einer reduzierenden Komponente, wie beispielsweise einem wasserlöslichen Disulfit, Thiosulfat, Dithionit, Hydrogensulfit, einer Diimin liefernden Verbindung wie Azodicarbonsäure oder Azodicarbonamid oder ferner auch Rongalit® (Anlagerungsprodukt von Natriumhydrogensulfit und Formaldehyd). Schließlich können mit Vorteil auch die Ammonium-, Alkali- und Erdalkalisalze der Permangansäure, der Mangansäure oder der manganigen Säure, insbesondere das Kaliumpermanganat, als Initiator Verwendung finden.

Ferner werden für die Emulsionspolymerisation von TFE mit ω-HPPVE fluorhaltige Emulgatoren eingesetzt, wie sie für die Emulsionspolymerisation von Fluorolefinen üblich und gebräuchlich sind und wie sie beispielsweise in der US-PS-2 559 752 beschrieben sind. Beispielsweise seien genannt die Alkali- und Ammoniumsalze von längerkettigen Perfluorcarbonsäuren, Chlorfluorcarbonsäuren, Perfluordicarbonsäuren sowie auch Perfluorsulfonsäuren und Perfluorphosphonsäuren. Bevorzugt besitzen solche Emulgatoren eine Kohlenstoffkette von 6 bis 12 C-Atomen. Bevorzugte Emulgatoren zur Herstellung der hier in Rede stehenden Copolymeren sind die Ammoniumsalze der Perfluoroctansäure. Alkali- und Ammoniumsalze der Perfluorpropoxypropionsäure seien als ein weiteres Beispiel für eine Klasse von gut wirksamen Emulgatoren erwähnt. Die genannten Emulgatoren können gegegebenenfalls auch in Form der freien Säuren eingesetzt und mit Ammoniak neutralisiert werden. Die eingesetzten Emulgatoren sollen möglichst telogen inaktiv sein.

Für die Erreichung der erfindungsgemäß notwendigen Ionenaustauschkapazität ist es erforderlich, daß das Copolymere einen Gehalt an ω-HPPVE in dem eng begrenzten Bereich von 19,8 bis 23 Mol-%, vorzugsweise von 20,3 bis 22,5 Mol-% besitzt. Um diesen Gehalt einstellen zu können, ist es notwendig, die zum Einsatz gelangenden Monomeren TFE und ω-HPPVE genau zu dosieren und für eine genaue Druck- und Temperaturkontrolle zu sorgen. Dabei soll der Druck im Bereich von 3 bis 8 bar, die Temperatur vorzugsweise im Bereich von 20 bis 60° C liegen. Bei der Copolymerisation von TFE und ω-HPPVE muß das letztgenannte Comonomere in einem gewissen Überschuß im Comonomerengemisch anwesend sein, das heißt in einem höheren molaren Anteil als es dem gewünschten molaren Anteil im herzustellenden Copolymeren entspricht. Dieser anzuwendende Überschuß, der insbesondere bei der Copolymerisation zu wäßrigen, kolloidalen Dispersion sehr gering ist, hängt auch etwas von der Art des Reaktionsgefäßes und dessen Füllhöhe ab. Er läßt sich durch wenige einfache Vorversuche ermitteln.

Der für die im erfindungsgemäßen Verfahren verwendeten Membranen erforderliche Bereich der Längenausdehnung (Quellung unter den angegebenen definierten Hydrolysebedingungen) läßt sich im allgemeinen dann erreichen, wenn das Copolymere aus TFE und ω-HPPVE (vor der Funktionalisierung) einen Wert für den Schmelzindex von weniger als 100 g/10 min bei 200° C und 11 kg Belastung aufweist. Ein solcher Wert kann bei den angegebenen Polymerisationsbedingungen, insbesondere im angegebenen Temperaturbereich leicht eingestellt werden, gegebenenfalls unter Einsatz eines Kettenübertragungsmittels von geeigneter telogener Aktivität, wie beispielsweise Aceton, Chloroform, Methylenchlorid, Methanol, Ethanol und viele andere, die dem Fachmann für die Copolymerisation von Fluorolefinen bekannt sind. Zur genauen Einstellung kann die Art und die Menge des Kettenübertragungsmittels, gegebenenfalls auch stattdessen oder zusätzlich die Konzentration des Initiators geändert werden. Erhöhter Zusatz oder erhöhte Aktivität des Kettenübertragungsmittels und/oder erhöhte Initiatorkonzentration bewirken eine Erhöhung der Längenausdehnung, im umgekehrten Fall erreicht man eine Verminderung.

Ein Zusatz von Puffern zur Kontrolle des pH-Wertes der wäßrigen Flotte ist zweckmäßig. Von den dem Fachmann bekannten Puffersubstanzen seien hier nur beispielsweise genannt die Alkali- oder Ammoniumhydrogenphosphate und die Alkali- oder Ammoniumoxalate.

Die so hergestellten Copolymerisate werden in geeigneter Weise - im Falle der wäßrigen kolloidalen Dispersion durch übliche Koagulationsmethoden - vom flüssigen Medium abgetrennt und zum Pulver getrocknet.

Das so gewonnene Copolymere von TFE und ω-HPPVE wird nach einem geeigneten Verfahren funktionalisiert, das heißt, die ω-H-Atome enthaltenden $CF_2H$-Endgruppen der ω-H-Perfluoralkoxy-Seitenketten werden umgewandelt in -COOR-Gruppen, wobei R ein Aryl-, Cycloalkyl- oder Alkylrest ist, vorzugsweise ein Alkylrest mit 1 bis 3 C-Atomen. Diese Umwandlung kann erfolgen durch Umsetzung des obengenannten Copolymeren von TFE und ω-HPPVE mit Peroxodisulfuryldifluorid zu einem entsprechenden Fluorsulfato-Derivat mit der Seitenketten-Endgruppe $-CF_2-OSO_2F$ und die

anschließende Umsetzung dieser Fluorsulfato-Derivate mit einem Alkohol zu den obengenannten Estergruppen. Diese Methode der Funktionalisierung ist ausführlich beschrieben in der US-PS-4 471 076.

Der angegebene Weg stellt das bevorzugte Herstellungsverfahren dar. Man kann jedoch auch direkt durch Copolymerisation von TFE mit einem Comonomeren der Formel

$$CF_2 = CF\text{-}O\text{-}(CF_2)_2X,$$

worin X eine COOR-Gruppe (R = kurzkettiger Alkylrest) oder eine Gruppe, die in eine solche COOR-Gruppe umgewandelt werden kann (zum Beispiel CN, COHal, $CONR_2$), bedeutet, zu solchen Copolymeren mit einer endständigen Estergruppe gelangen. Diese Methode der Copolymerisation ist bekannt aus der US-PS-3 546 186.

Aus dem so gewonnenen Copolymeren mit einer endständigen Alkoxycarbonylgruppe wird nach konventionellen Methoden, bevorzugt durch Kalandrieren oder Extrusion aus einer Breitschlitzdüse, ein Film in einer Dicke von 100 bis 250 µm hergestellt.

Aus dem nach einem dieser Verfahren hergestellten Membranfilm wird durch Hydrolyse die Estergruppe entfernt. Dies kann in überlicher Weise erfolgen durch Zusatz von Säuren, wobei freie Carboxylgruppen entstehen, oder durch Zusatz von Alkalien, wobei die Salzform der Carboxylgruppe resultiert.

Die Ionenaustauschkapazität wird bestimmt aus dem $^{19}$-F-Hochtemperatur-NMR-Spektrum (376,5 MHz), aufgenommen bei 573 K im Adipinsäure-2-ethylhexylester; Referenzsubstanz $CFCl_3$. Die Signale bei -79 bis -86 ppm ($-O-CF_2$) sowie die Signale zwischen -105 und -125 ppm (alle $CF_2$-Gruppen der Hauptkette) werden integriert. Unter Berücksichtigung der Tatsache, daß zu jeder $-O-CF_2$-Gruppierung eine $-CF_2$-Gruppe in der Hauptkette gehört, kann dann der Gehalt und daraus die Zonenaustauschkapazität in bekannter Weise errechnet werden.

Zur Bestimmung der Längenausdehnung (Quellung) wird eine Probe der Esterform der Membran unter definierten Bedingungen, nämlich in 25 gew.-%-iger wäßriger Kalilauge bei 90° C 12 h lang verseift und anschließend 12 h in gesättigter Natriumchloridlösung äquilibriert. Daran wird die Längenänderung im Vergleich zur Ausgangslänge gemessen.

Der Schmelzindex-Wert wird bestimmt nach der DIN-Norm 53735-70 mit einer Düse von 2,1 mm Durchmesser und einer Länge von 8 mm bei 300° C und einer Belastung mit einer Masse von 11 kg (soweit Temperatur und Belastung nicht in einzelnen Beispielen anders angegeben sind).

Werden die durch diese ausgewählten Merkmale, nämlich

1. copolymerisierte wiederkehrende Einheiten wie oben definiert,
2. einen eng eingegrenzten Bereich der Ionenaustauschkapazität wie oben definiert, und
3. die oben angegebene Längenausdehnung (Quellung),

gekennzeichneten Einschicht-Membranen erfindungsgemäß in Elektrolyse von Natriumchlorid eingesetzt, so können die Stromausbeute und die Energieausbeute gegenüber anderen bekannten Einschicht-Membranen erheblich gesteigert werden und dennoch ist eine lange und ungestörte Betriebsdauer gewährleistet. In den folgenden Vergleichsbeispielen - in Beziehung zu den erfindungsgemäßen Beispielen - wird gezeigt, daß die Verbesserung nicht eintritt, wenn man auch nur von einem der beiden Parameter 2.) und 3.) abweicht.

**Beispiel 1**

a) Herstellung des Copolymeren

In ein emailliertes Polymerisationsgefäß mit 4000 ml Volumen, das mit einem Impeller-Rührer versehen ist, gibt man 3000 ml entionisiertes Wasser, 20 g Perfluoroctansäure sowie 18,6 g Ammoniumoxalat und stellt diese wäßrige Phase mit Ammoniak auf einen pH-Wert von 5 ein. Das Gefäß wird sodann mit Stickstoff und mit Tetrafluorethylen gespült. Man legt 150 g ω-HPPVE vor, erwärmt auf 32° C, preßt TFE bis zum Erreichen eines Drucks von 5 bar auf und startet die Polymerisation mit 100 ml einer 0,2 gew.-%-igen wäßrigen Kaliumpermanganatlösung. Unter Beibehaltung der genannten Temperatur werden 20 l TFE kontinuierlich zugeführt. Nach Zugabe von 5, 8, 11, 14 und 17 Litern TFE werden jeweils 50 ml ω-HPPVE zudosiert. Während der Reaktionszeit von 135 Minuten werden kontinuierlich weitere 160 ml der genannten Kaliumpermanganatlösung zugepumpt, um die Reaktionsgeschwindigkeit konstant zu halten. Nach Beendigung der Reaktion wird der Kessel vorsichtig entspannt und mit Stickstoff gespült. Das Polymer wird aus der nahezu wasserklaren Dispersion mit Salzsäure ausgefällt und unter Rühren durch Zugabe einer kleinen Menge Methylenchlorid agglomeriert. Man wäscht mit Wasser und trocknet das Produkt in der Wirbelschicht. Es werden 765 g Copolymeres mit einem Schmelzindex Wert von 1,7 g/10 min, gemessen bei 300° C und 11 kg Belastung, erhalten. Das Copolymere enthält 21,8 Mol-% ω-HPPVE (bestimmt aus dem $^{19}$-F-Hochtemperaturspektrum). Dieses Produkt wird dann, wie in der EP-A-88 285, Beispiel 2, beschrieben, mit Peroxodisulfuryldifluorid umgesetzt und anschließend mit Methanol verestert. Der Umsetzungsgrad beträgt mehr als 99 %, die Ausbeute ist nahezu quantitativ. Man erhält 770 g funktionalisiertes Produkt, welches 21,8 Mol-% Carbomethoxygruppen enthält, was einer Ionenaustauschkapazität von 1,66 mVal/g

entspricht. Dieses Polymer wird auf einem Walzenstuhl zwischen Polyimid-Folie plastifiziert und zu einer Folie von 180 µm ausgewalzt, zurechtgeschnitten und 12 h in 25 gew.-%-iger Kalilauge bei 90° C verseift. Die Längenausdehnung der Membran beträgt 4,8 %.

b) Einsatz in der Chloralkalielektrolyse
Die Membran wird in eine Elektrolysezelle eingespannt, die mit einer edelmetallaktivierten Titan-Streckmetall-Anode und einer mit Raney-Nickel aktivierten Kathode versehen ist. Man elektrolysiert bei einer Stromdichte von 3000 A/m$^2$ bei 90° C. Die Anolytkonzentration der wäßrigen Natriumchloridlösung wird auf 200 g/l, die Laugekonzentration auf 35,0 Gew.-% eingestellt. Bei einer Zellspannung von 3,00 V erhält man eine Stromausbeute von 94,2 %. Dies entspricht einem Energieverbrauch von 2134 kWh/t Natriumhydroxid. Dieser Energieverbrauch wird über mehr als 5000 Betriebsstunden eingehalten.

**Vergleichsbeispiel 1**

a) Die Copolymerisation wird wie in Beispiel 1 durchgeführt, jedoch werden statt 500 g insgesamt 450 g ω-HPPVE eingesetzt. Man erhält 720 g Copolymeres mit einem Schmelzindex-Wert von 1,0 g/10 min, gemessen bei 300° C und 11 kg Belastung. Das Produkt enthält 19,6 Mol-% ω-HPPVE. Das nach der in Beispiel 1 angegebenen Methode funktionalisierte Produkt enthält 19,6 Mol-% Carbomethoxygruppen, was einer Ionenaustauschkapazität von 1,54 mVal/g entspricht. Die Längenausdehnung der Membran, bestimmt nach der im Beispiel 1 angegebenen Methode, beträgt 3,5 %.

b) Unter den Elektrolysebedingungen von Beispiel 1 erhält man bei einer Zellspannung von 3,2 V eine Stromausbeute von 93,0 %. Dies entspricht einer Energieausbeute von 2305 kWh/t Natriumhydroxid.

**Vergleichsbeispiel 2**

a) Die Copolymerisation wird wie in Beispiel 1 durchgeführt, jedoch werden statt 500 g ω-HPPVE insgesamt 550 g eingesetzt. Man erhält 815 g Copolymeres mit einem Schmelzindex-Wert von 3,0 g/10 min, gemessen bei 300° C und 11 kg Belastung. Das Produkt enthält 23,9 Mol-% ω-HPPVE. Das gemäß der in Beispiel 1 angegebenen Methode funktionalisierte Produkt enthält dann 23,9 Mol-% Carbomethoxygruppen, was einer Ionenaustauschkapazität von 1,78 mVal/g entspricht. Die Längenausdehnung beträgt 5,5 %, gemessen wie in Beispiel 1 angegeben.

b) Unter den Elektrolysebedingungen von Beispiel 1 erhält man bei einer Zellspannung von 2,95 V eine Stromausbeute von 86,0 %. Dies entspricht einer Energieausbeute von 2298 kWh/t Natriumhydroxid.

**Vergleichsbeispiel 3**

a) In das Polymerisationsgefäß, beschrieben in Beispiel 1, gibt man 3000 ml entionisiertes Wasser, 20 g Perfluoroctansäure, 22 g Dikaliumhydrogenphosphat und 40 mg Kupfersulfat und stellt mit Ammoniak in dieser wäßrigen Phase einen pH-Wert von 9 ein. Das Gefäß wird dann mit Stickstoff und mit TFE gespült. Man legt 150 g ω-HPPVE vor, erwärmt auf 72° C, erhöht den Druck durch Aufpressen von TFE auf 8,5 bar und startet die Reaktion mit 5 g Ammoniumpersulfat. Sodann werden 12 l TFE kontinuierlich zugeführt, wobei die Temperatur auf 72° C gehalten wird. Nach der Zugabe von 2, 4, 6, 8 und 10 Litern TFE werden jeweils 50 ml ω-HPPVE zugeführt. Während der Reaktionszeit von 80 Minuten werden weitere 10 g Ammoniumpersulfat zugeführt, um die Reaktionsgeschwindigkeit konstant zu halten. Das entstandene Copolymere wird, wie in Beispiel 1 beschrieben, aufgearbeitet und man erhält dabei 760 g Produkt mit einem Schmelzindex-Wert von 42 g/10 min, gemessen bei 200° C und 5 kg Belastung. Das Produkt enthält 21,5 Mol-% ω-HPPVE. Es wird nach der in Beispiel 1 angegebenen Methode funktionalisiert und besitzt dann 21,5 Mol-% Carbomethoxygruppen, was einer Ionenaustauschkapazität von 1,64 mVal/g entspricht. Die Längenausdehnung der Membran, bestimmt wie in Beispiel 1 angegeben, beträgt 7,0 %.

b) Unter den Elektrolysebedingungen, angegeben in Beispiel 1, findet man bei einer Zellspannung von 2,95 V eine Stromausbeute von 85,0 %. Dies entspricht einem Energieverbrauch von 2326 kWh/t Natriumhydroxid.

**Beispiel 2**

a) In das Polymerisationsgefäß, beschrieben in Beispiel 1, gibt man 3000 ml entionisiertes Wasser, 20 g Perfluoroctansäure, 15 g Dikaliumhydrogenphosphat, 2 g Natriumhydroxid, 4 g Ammoniumpersulfat, 250 mg Eisensulfat und 500 mg des Dinatriumsalzes von Ethylendinitrilotetraessigsäure. Das Gefäß wird mit Stickstoff und TFE gespült. Man legt dann 116 g ω-HPPVE vor, erwärmt auf 40° C, erhöht den Druck durch Aufpressen von TFE auf 5 bar und startet die Reaktion mit 30 ml einer Lösung von 5 g Rongalit® (Anlagerungsprodukt von Natriumdithionit und Formaldehyd) und 2 g

NaOH auf 250 ml Wasser. Dann werden 26 l TFE kontinuierlich zugeführt, wobei die Temperatur auf 40°C gehalten wird. Nach Zugabe von 4, 7, 10, 13, 16, 19, 22 und 25 Litern TFE werden jeweils 30 ml (48 g) ω-HPPVE zudosiert. Während der Reaktionszeit von 80 Minuten werden weitere 70 ml der genannten Rongalit®-Lösung zudosiert, um die Reaktionsgeschwindigkeit konstant zu halten. Die Isolierung und Aufarbeitung des Copolymelen erfolgt wie in Beispiel 1 beschrieben. Man erhält 960 g Produkt mit einem Schmelzindex-Wert von 20 g/10 min, gemessen bei 300°C und 11 kg Belastung. Das Copolymere enthält 21,5 Mol-% ω-HPPVE. Das nach der in Beispiei 1 angegebenen Methode funktionalisierte Copolymere enthält dann 21,5 Mol-% Carbomethoxygruppen, was einer Ionenaustauschkapazität von 1,64 mVal/g entspricht. Die Längenausdehnung der Membran, bestimmt wie in Beispiel 1 angegeben, beträgt 4,5 %.

b) Bei einer Anolytkonzentration von 180 g/l und einer Laugekonzentration von 35 % findet man bei einer Zellspannung von 2,98 V eine Stromausbeute von 93,5 %. Dies entspricht einem Energieverbrauch von 2135 kWh/t Natriumhydroxid.

**Beispiel 3**

a) In das Polymerisationsgefäß, beschrieben in Beispiel 1, gibt man 3000 ml entionisiertes Wasser, 15 g Dikaliumhydrogenphosphat, 4 g Ammoniumpersulfat sowie 20 g Perfluoroctansäure und stellt mit Ammoniak einen pH-Wert von 9 ein. Das Gefäß wird mit Stickstoff und mit TFE gespült, sodann legt man 116 g ω-HPPVE vor, erwärmt auf 50°C, erhöht den Druck durch Aufpressen von TFE auf 6,5 bar und startet die Reaktion mit 20 ml einer Lösung von 4 g Natriumdisulfit und 20 mg Kupfersulfat in 400 ml Wasser. Dann werden 20 l TFE zugeführt, wobei die Temperatur durch Kühlung auf 50°C gehalten wird. Nach Zugabe von 3, 5, 7, 9, 11, 13, 15 und 17 Litern TFE werden jeweils 30 ml (48 g) ω-HPPVE zudosiert. Während der Reaktionszeit von 80 min werden weitere 70 ml Initiatorlösung zudosiert, um die Reaktionsgeschwindigkeit konstant zu halten. Isolierung und Aufarbeitung des Copolymeren erfolgen wie in Beispiel 1 angegeben. Man erhält so 980 g Copolymeres mit einem Schmelzindex-Wert von 35 g/10 min, gemessen bei 250°C und 11 kg Belastung. Das Copolymere enthält 22,0 Mol-% ω-HPPVE. Es wird nach der in Beispiel 1 angegebenen Methode funktionalisiert, danach enthält es 22,0 Mol-% Carbomethoxygruppen, was einer Ionenaustauschkapazität von 1,67 mVal/g entspricht. Die Längenausdehnung der Membran beträgt 6,0 %, bestimmt wie in Beispiel 1 angegeben.

b) Bei einer Anolytkonzentration von 200 g/l und einer Laugekonzentration von 35,0 % erhält man bei einer Zellspannung von 2,95 V eine Stromausbeute von 90,5 %. Dies entspricht einem Energieverbrauch von 2184 kWh/t Natriumhydroxid.

**Patentansprüche**

1. Verfahren zur Elektrolyse einer wäßrigen Lösung von Natriumchlorid in Elektrolysezellen, die durch eine Kationenaustauscher-Membran aus einem perfluorierten Polymeren mit Carboxylgruppen in eine Anoden- und eine Kathodenkammer geteilt ist, dadurch gekennzeichnet, daß die Kationenaustauscher-Membran aus einem Copolymeren besteht, das aus wiederkehrenden Einheiten

$-CF_2-CF_2-$

und

$-CF_2-CF-$
|
$O-CF_2-CF_2-COONa$

zusammengesetzt ist, daß sie eine Ionenaustauschkapazität von 1,55 bis 1,74 mVal/g trockenes Polymeres in der $H^+$-Form besitzt und ihre Längenausdehnung bei Raumtemperatur, welche eintritt durch Verseifen der Esterform in 25 gew.-%-iger wäßriger Kalilauge bei 90°C über einen Zeitraum von 12 h, zwischen 3,2 und 6,0 % liegt.

2. Verfahren nach Anspruch 1, dadurch gekennzeichnet, daß die Kationenaustauscher-Membran eine Ionenaustauschkapazität von 1,58 bis 1,70 mVal/g trockenes Polymeres besitzt.

3. Verfahren nach Anspruch 1, dadurch gekennzeichnet, daß die Längenausdehnung der Kationenaustauscher-Membran zwischen 3,5 und 5,5 % liegt.

4. Verfahren nach einem oder mehreren der Ansprüche 1 bis 3, dadurch gekennzeichnet, daß die Kationenaustauscher-Membran eine Stärke von 100 bis 250 μm besitzt und keine verstärkenden Bestandteile enthält.

**Claims**

1. A process for the electrolysis of an aqueous solution of sodium chloride in electrolytic cells divided into an anode chamber and a cathode chamber by a cation exchange membrane of a perfluorinated polymer with carboxyl groups, characterised in that the cation exchange membrane comprises a copolymer which is composed of recurring units of

$-CF_2-CF_2-$

and

$$-CF_2-CF-$$
$$|$$
$$O-CF_2-CF_2-COONa$$

and has an ion exchange capacity of 1.55 to 1.74 m-eguivalents/g of dry polymer in the H+ form and a longitudinal expansion at room temperature, caused by saponification of the ester form in 25 % by weight aqueous potassium hydroxide solution at 90°C over a period of 12 hours, of between 3.2 and 6.0 %.

2. The process as claimed in claim 1, characterised in that the cation exchange membrane has an ion exchange capacity of 1.58 to 1.70 m-equivalents/g of dry polymer.

3. The process as claimed in claim 1, characterised in that the longitudinal expansion of the cation exchange membrane is between 3.5 and 5.5 %.

4. The process as claimed in one or more of claims 1 to 3, characterised in that the cation exchange membrane has a thickness of 100 to 250 µm and does not contain reinforcing constituents.

## Revendications

1. Procédé d'électrolyse d'une solution aqueuse de chlorure de sodium dans une cellule électrolytique divisée en un compartiment anodique et un compartiment cathodique par une membrane d'échange de cations formée d'un polymère perfluoré à groupes carboxyliques, procédé caractérisé en ce que cette membrane d'échange est en un copolymère constitué de motifs

$$-CF_2-CF_2-$$

et

$$-CF_2-CF-$$
$$|$$
$$O-CF_2-CF_2-COONa$$

en ce qu'elle a une capacité d'échange d'ions de 1,55 à 1,74 mVal par gramme de polymère sec sous sa forme H+, et en ce que sa dilatation longitudinale à la température ambiante, qui se produit par saponification de la forme ester dans une lessive de potasse aqueuse à 25 % à la température de 90°C en une période de 12 heures, est comprise entre 3,2 et 6,0 %.

2. Procédé selon la revendication 1 caractérisé en ce que la membrane à une capacité d'échange d'ions de 1,58 à 1,70 mVal par gramme de polymère sec.

3. Procédé selon la revendication 1 caractérisé en ce que la dilatation longitudinale de la membrane est comprise entre 3,5 et 5,5 %.

4. Procédé selon une ou plusieurs des revendications 1 à 3, caractérisé en ce que la membrane a une épaisseur de 100 à 250 µm et ne contient aucune matière de renforcement.